# EUROPEAN PATENT SPECIFICATION

(11) **EP 1 117 569 B1**
(45) Date of publication and mention of the grant of the patent: **02.11.2005**
(21) Application number: 99935475.6
(22) Date of filing: 08.07.1999
(51) Int. Cl.: B60R 21/24, B60R 21/26, B60R 21/16

(54) **AIRBAG WITH DIVERTER AND EXPANDED VOLUME CHAMBER**
AIRBAG MIT UMLENKVORRICHTUNG UND EINER IN IHREN VOLUMEN EXPANDIERBAREN KAMMER
AIRBAG AVEC DEFLECTEUR ET CHAMBRE A VOLUME EXPANSIBLE

(30) Priority: 06.10.1998 US 167015
(43) Date of publication of application: 25.07.2001
(73) Proprietor: KEY SAFETY SYSTEMS, INC., Sterling Heights, Michigan 48314 (US)
(72) Inventor: WIPASURAMONTON, Pongdet, P., Rochester, MI 48307 (US); KALANDEK, Bruce, A., Dearborn, MI 48124 (US); TOBIAN, Robert, New Baltimore, MI 48047 (US); BAILEY, Brian, J., Romeo, MI 48065-4487 (US); DILLON, Michael, R., Gaines, MI 48436 (US); SALMO, Shakir, M., Madison Heights, MI 48071 (US); PRIEMER, Peter, D-61282 Friedrichsdorf (DE); JOST, Stefan, D-65817 Eppstein-Bremthal (DE); JOST, Markus, D-65439 Flörscheim (DE)
(74) Representative: Gislon, Gabriele
(86) International application number: PCT/US1999/015586
(87) International publication number: WO 2000/020260

(56) References cited:
- US-A- 3 799 575
- US-A- 4 265 468
- US-A- 5 172 933
- US-A- 5 573 270
- US-A- 5 632 506
- US-A- 5 791 685
- US-A- 5 803 485
- US-A- 5 895 070

## Description

The invention generally relates to airbag systems and more particularly to a side impact, or rollover, airbag system.

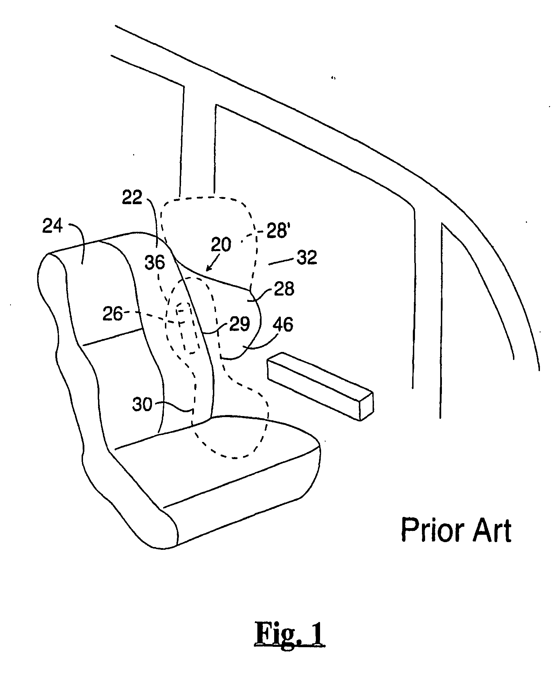

FIG. 1 shows a prior art airbag system 20 mounted in an outboard portion 22 of a vehicle seat 24. The airbag system comprises an inflator 26 and an inflatable airbag 28. Upon activation of the inflator inflation gasses are supplied to the airbag causing the airbag to tear open a seam in the seat or open a movable door (not shown) in the seat. When deployed the airbag is positioned between a vehicle occupant, generally shown by phantom line 30, and the side 32 of the vehicle. As illustrated in FIG. 1, the airbag 28 is relatively small and is designed to protect the torso of an adult. Airbags may also include an upper appendage or second chamber generally shown by phantom line 28¹, which is illustrative of a head chamber of a larger airbag.

In FIG. 1 the vehicle occupant 30 is shown in phantom relatively small with the head 36 positioned adjacent the torso portion, or lower chamber, of the airbag. This is illustrative of one of the possible out-of-position (OOP) seating conditions of the vehicle occupant. As an example, the vehicle occupant may be a small child, having his head cradled in the void between the seat and the vehicle side 32. Upon deployment of the airbag 28, the vehicle occupant's head or other portions of the vehicle occupant's body may be interfered with by the inflating airbag.

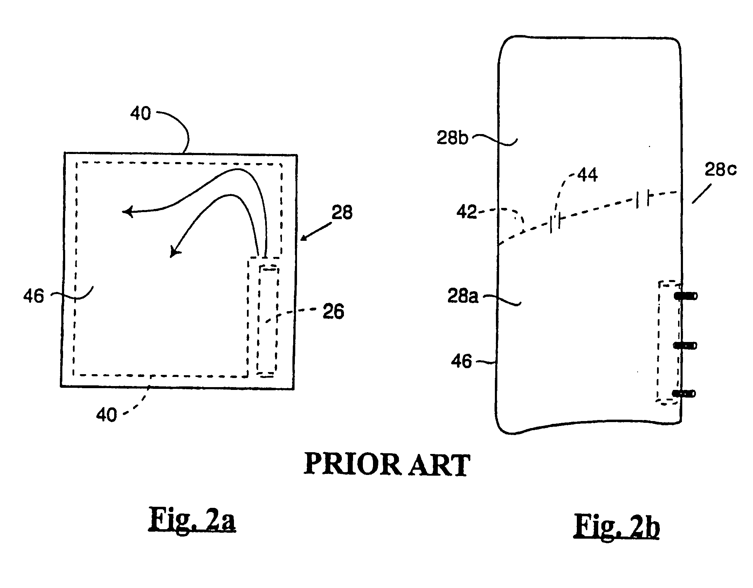

Reference is made to FIGS. 2A and 2B that illustrate two prior art airbags 28, 28c. A prior art airbag 28 is typically manufactured utilizing two generally identical panels of woven fabric that are sewn about a peripheral edge shown 40. The airbag includes means, such as an opening, for receiving the inflator 26 therein. FIG. 2B illustrates an enlarged airbag 28c having a lower or torso chamber 28a and an upper or head chamber 28b. The chambers 28a, 28b are separated by a separator panel or seam of stitches 42 which includes a plurality of vent openings 44 to allow the migration of inflation gas from the lower chamber to the upper chamber.

Consider the operation of the airbags shown in FIGS. 2A and 2B in conjunction with the construction of the vehicle shown in FIG. 1. As is known, the crush zone between the side of the vehicle 32 and the vehicle occupant 30 is relatively small in a side impact crash. Prior to being inflated the airbag 28 is maintained in a compact folded orientation within a pocket located within the vehicle seat. To protect the vehicle occupant from injury during this type of crash the inflator must quickly (within 8 to 10 milliseconds) inflate the airbag and cause it to be deployed between the vehicle occupant and the vehicle structure. Deployment of the airbag in the required time requires that the inflator be capable of producing a significant amount of inflation gas within a few milliseconds. Experience has shown that as an inflator 26 provides inflation gas, airbags constructed similar to those shown in FIGS. 2A and 2B push the forward edge 46 of the torso chamber outwardly extremely quickly. If the vehicle occupant is in an out-of-position orientation, this type of deployment of the airbag may result in an injury.

US-A-5803485 discloses a side impact airbag according to the preamble of claim 1 with two chambers where the diverter is generally the inflator itself and wherein the two chambers are separated; the only exception is the embodiment of fig. 14, where a diverter is provided. This diverter has no tubular structure, i.e. it has no side walls, closed bottom portion and open top portion and it directs the gas flowing in towards the head protection upper chamber.

The above mentioned problem is solved by an airbag according to claim 1.

### Brief Description of the Drawings

FIG. 1 is shows a prior art side impact airbag system.
FIGS. 2A and 2B show prior art torso and side impact airbags.
FIGS. 3A to 3F show the various parts of an airbag.
FIG. 4 shows an assembled airbag.
FIG. 5 shows a cross-sectional view of a side impact system.
FIG. 6 shows another cross-sectional view.
FIG. 7 shows a further cross-section view.
FIG. 8 illustrates an alternate embodiment of the invention.
FIGS. 9 and 10 show embodiments not according to the invention.

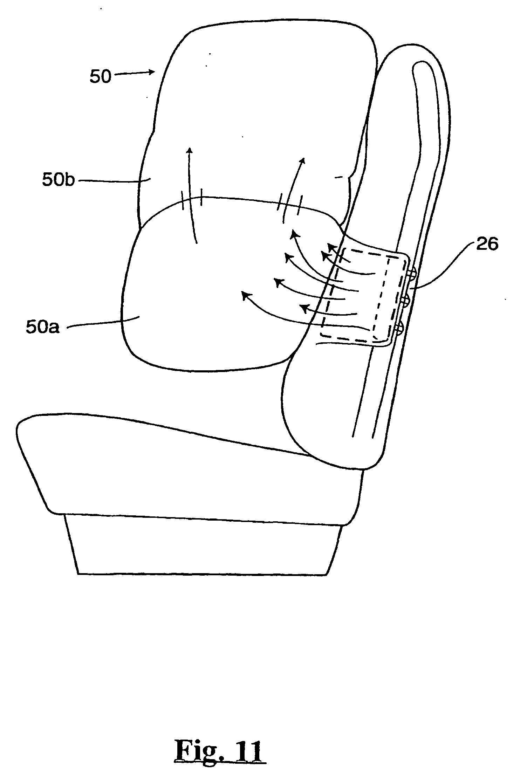

FIG. 11 is a side view of a vehicle seat with an airbag deploying therefrom.
FIGS. 12A to 12I show various stages in the folding of an airbag cushion.
FIG. 13A shows a side plan view of an airbag container.
FIG. 13B shows an end plan view of the container.
FIG. 13C shows an isometric view of the container.

### Detailed Description of the Invention

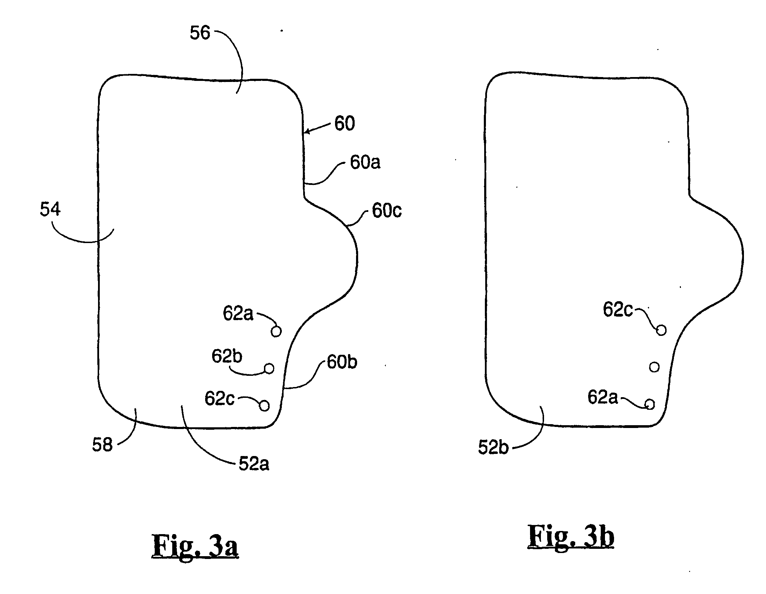

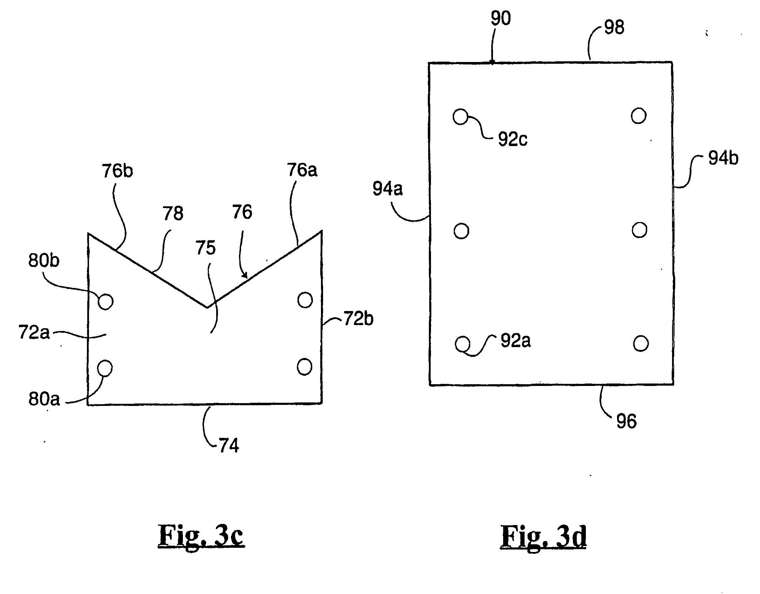

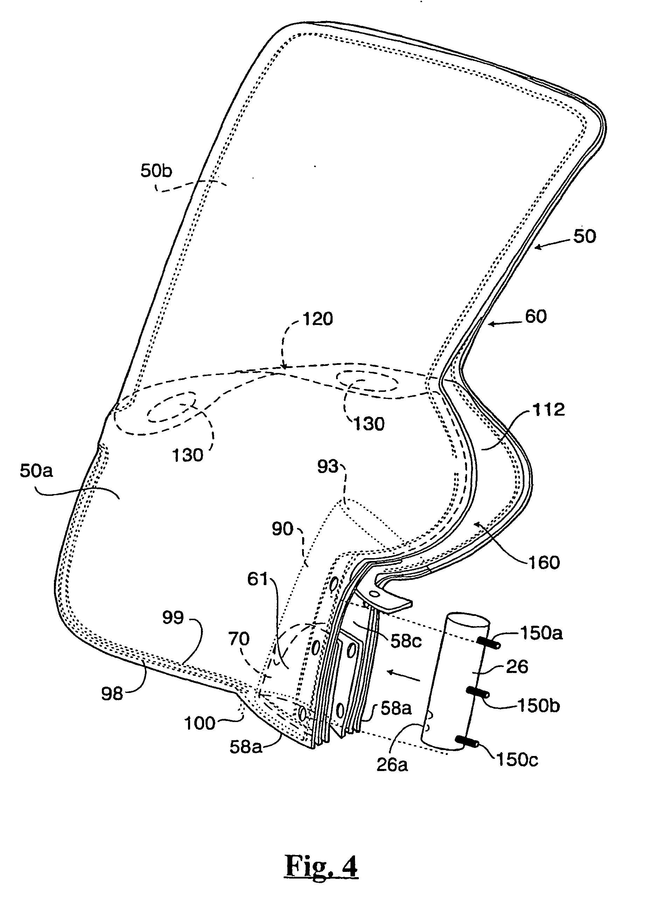

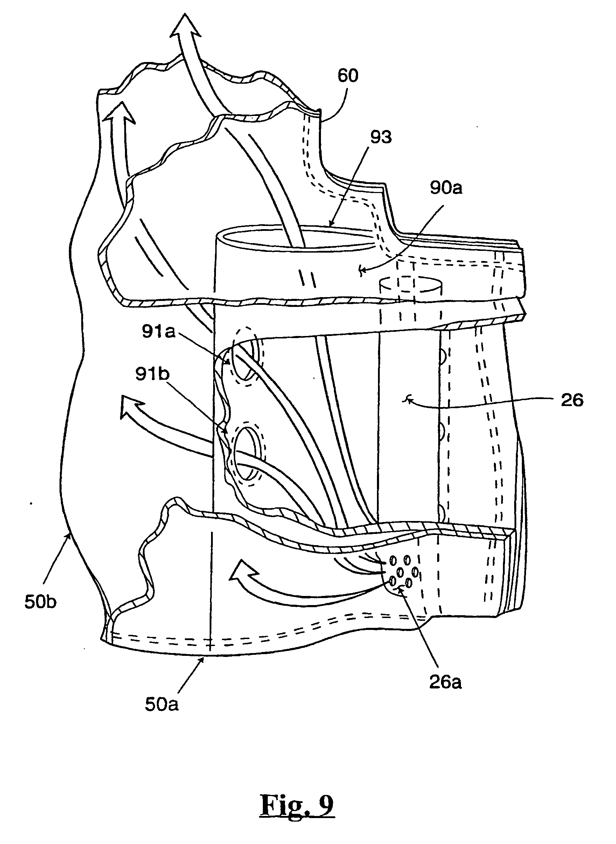

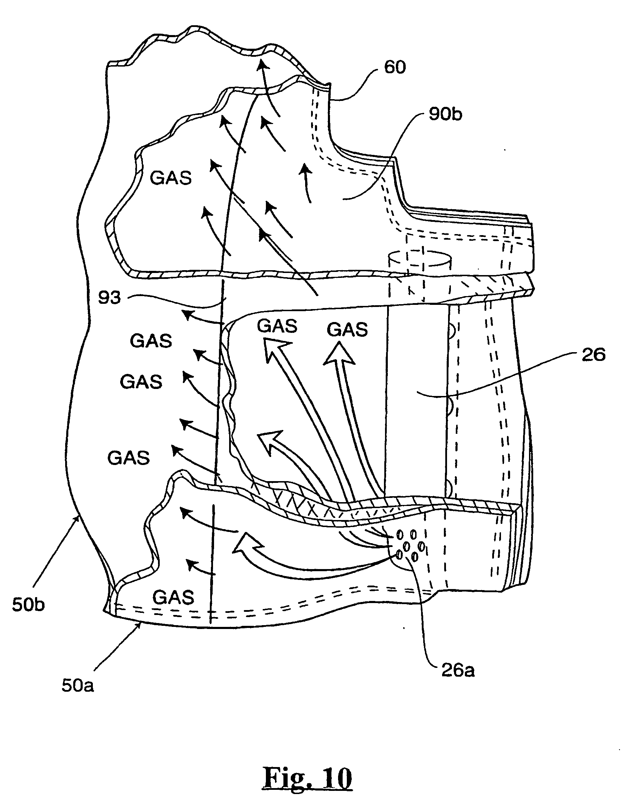

Reference is now made to FIGS. 3A-3F and 4. The airbag 50 of the present invention comprises a first panel 52a and a second panel 52b. These panels are substantially identical and can be made of woven airbag fabric that may be coated (with silicon or the like) or uncoated. The various panels can also be made of a plastic film. If a permeable woven fabric is used the inside surfaces of each panel may be covered with silicon or other coating to reduce permeability. Each panel includes a front first side 54, a top 56 and bottom 58. Additionally, each panel includes an opposing rear second side 60. In the embodiment shown in FIGS. 3A-3F and 4, the second side 60 is not straight. This second side may include a generally top first straight portion 60a, a lower second straight portion 60b and an arcuate portion 60c therebetween. FIGS. 9 and 10 show an airbag 50¹ not according to the invention having a generally straight rear second side. A plurality of mounting holes 62a-62c are positioned near in the lower corner (adjacent the lower straight portion 60b) of each panel 52a, 52b.

As shown in FIG. 4, the panels 52a, 52b are sewn together, generally along the bottom 58, side 54, top 56 and the top portion 60a of the second side 60.

The airbag 50 may further include an optional inner panel 70 that primarily functions as a.heat shield to protect an outer or diverter panel 90 from the heated inflation gas. This inner panel includes sides 72a, 72b a bottom 74 and a top 76. As illustrated in FIG. 3C the top includes a depression, or low point, 78 formed by two straight edges 76a, 76b. The edges of the top 76 can also be arcuate in shape. The panel 70, along its sides 72a, 72b, includes openings 80a, 80b that are in alignment with openings 62a, 62b in the panels 52a, 52b. The diverter panel, or diverter, 90 is generally rectangular in shape and includes a plurality of mounting openings 92a-92c aligned with openings in each of the side panels 50a, 50b. The diverter 90 includes sides 94a, 94b, a bottom 96 and top 98. As illustrated in FIG. 9, a diverter 90a is provided with optional flow openings or vents 91a, 91b which permit some of the inflation gas to exit generally horizontally into the thorax chamber 50a rather than exit solely out of the top 93 (see FIG. 4) of the diverter 90. The discrete vents, or openings, 91a, 91b are not employed in the airbag of FIG. 10. The diverter 90b of FIG. 10 is made from a fabric having a high permeability that permits the inflation gas to exit through pores 93 (of the fabric) of the diverter 90b.

Reference is again briefly made to FIG. 4. A sewn seam 99 joins the bottoms 58 of the panels 52a, 52b and does not extend across the entire bottom, but ends generally at a location 100 which defines flap portions 58a, 58b at the bottom which are not joined by the sewn seam. These flap portions create a pocket 58c in which the inflator 26 is received. It should be appreciated that the sewn seam 99 can also extend across the entire bottom in which case the lower portions of the pocket 58c are sewn together.

As can also be seen in FIG. 4, the inner panel 70 is registered relative to the diverter panel 90 such that the openings 80a, 80b are in one component are aligned with openings 92a, 92b. Thereafter, aligned bottom portions 74, 96 of inner and diverter panels 70 and 90 are sewn to the portions 58a of the bottom of each panel 52a, 52b.

As can be seen from FIG. 4, the central portion 75 of the inner panel 70 forms an open top chute, or tube, which communicates with a second open top chute or tube formed by the diverter panel 90.

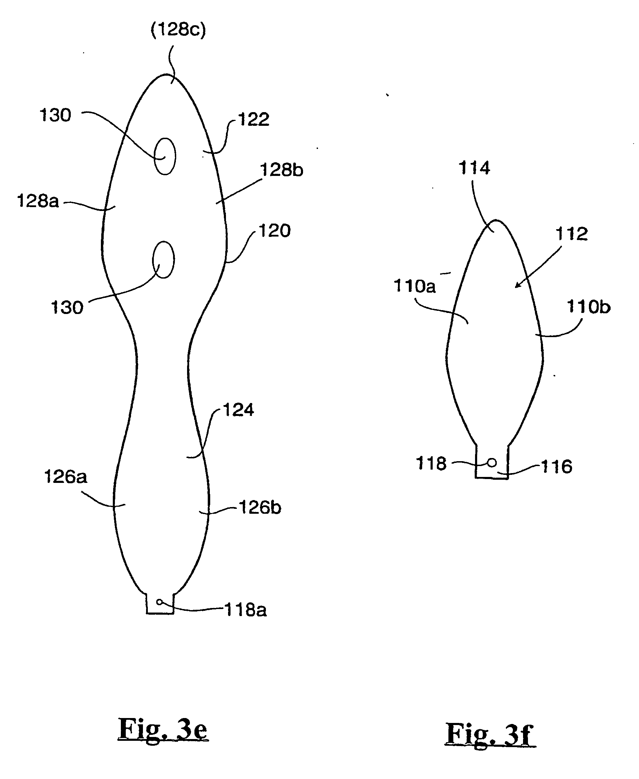

As mentioned above, the rear side 60 of each of the panels 52a, 52b includes an extending portion 60c. The extending portions of the panels are each respectively joined to sides 110a, 110b of a rear separator panel 112 (also shown in FIG. 3F). The sides of the side rear separator panel 112 generally meet at a curved apex 114. The other ends of the sides form a rectangular flap 116 that includes an opening 118. As shown in FIG. 4, the panel 112 separates the curved portions 60c of each panel 52a, b, thereby forming a 3-dimensional bubble, or pressure, accumulator 160 increasing the volume of the lower chamber 50a of the airbag 50 in relation to the prior art airbags illustrated in FIGS. 2A and 2B. The airbag 50 as illustrated in FIG. 4A is a two-chambered airbag having a lower or torso chamber 50a and an upper, or head, chamber 50b. A separator 120 defines the boundaries between the upper and lower chambers 50a, 50b. The separator panel 120 has two portions shown in FIG. 3E. The first portion 122 separates the upper and lower chambers and a second portion 124 that is coextensive with and reinforces the rear panel 112. More specifically, the second portion 124 is shaped similar to the panel 112 and additionally includes an opening 118a. The sides 126a, 126b are generally of the same dimension as the sides 110a, 110b of the panel 112. The first portion 122 additionally has sides 128a, and 128b that define a generally oval shaped portion 122. The oval shaped portion additionally includes vent holes 130. As FIG. 4, the sides 128a, 128b (including a tip portion 128c) are sewn to the panels 52a, 52b thereby separating and defining the upper and lower chambers 50a, 50b of the airbag 50. The lower lobe, or portion, 124 of panel 120 is positioned behind the panel 112 wherein the sides 110a, 110b of panel 112 and sides 126a, 126b of portion 124 (of separator panel 120) are sewn to the respective side portion 60c of each of the panels 52a, 52b.

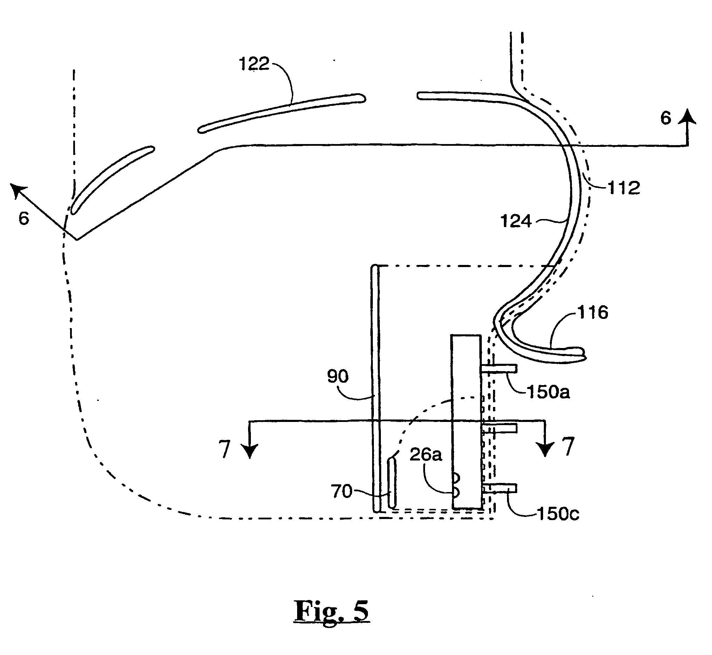

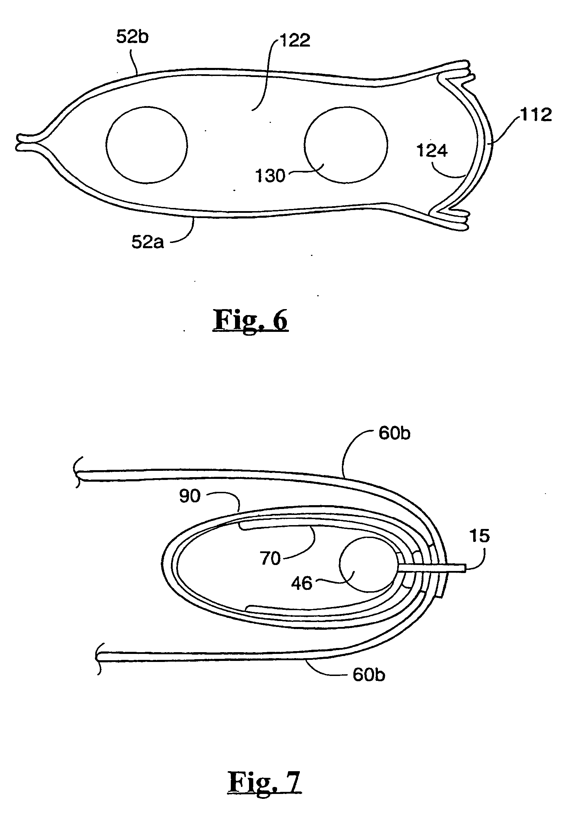

Further details of the construction of the airbag can be seen in FIGS. 5-7 which illustrate various cross sectional views of the airbag 50.

As can be seen in FIG. 5, the inflator 26 includes a plurality of mounting studs 150a-150c (also shown in FIG. 4). The inflator is positioned in the pocket 58c formed by the panels 70, 90 and lower portions of the side panels 50a, 50b. The registered portions of panels 112, 120, which include the openings 118, 118a respectively, are inserted over one of the studs such as mounting stud 150a. Thereafter, the corners of the side panels (having the openings 62a -62c) are moved such that the studs 150a-c are received through the openings 62a-c (as well as openings in the panels 70, 90) thereby folding this lower portion of each panel about the inflator 26. The exit ports 26a are positioned in the lower part of the diverter 90. In some embodiments the mounting studs 150a-c cannot be directly secured to the inflator 26. This may be the case in a hybrid inflator (which uses a pressure vessel). In this case the inflator is placed within a hollow sleeve, or manifold, (not shown) in a known manner. The studs 150a-c will extend from the manifold. The manifold will also include one or more flow ports aligned with the exit ports of the inflator.

Upon activation of the inflator 26, inflation gas impacts the panels 70, 90 and is channeled upwardly through the open top 93 of the tube (also formed by the panels 70, 90) directly into the bubble portion 160 of the lower chamber 60a. The open top is preferably positioned slightly below the separator 120. The flow of inflation gas creates a temporary, high-pressure gradient in the lower chamber 60a in the vicinity of the bubble 160 in relation to other portions of the lower chamber 50a. The inflation gas thereafter migrates to the lower and front portion of the lower chamber 50a, thereby more gently forcing the forward edge 46 of airbag 50 outwardly toward the vehicle occupant 30. As the lower chamber is being inflated, a portion of the inflation gas enters the upper chamber 50b through the vent openings 130. During a crash the vehicle occupant will typically impact the lower portion 50a of the airbag prior to impacting the head portion 50b. This impact additionally forces gas in the lower chamber upwardly through the vent holes 130 to more completely fill the upper chamber 50b to cushion the vehicle occupant's head and upper portions of the vehicle occupant's torso relative to the structure of the vehicle.

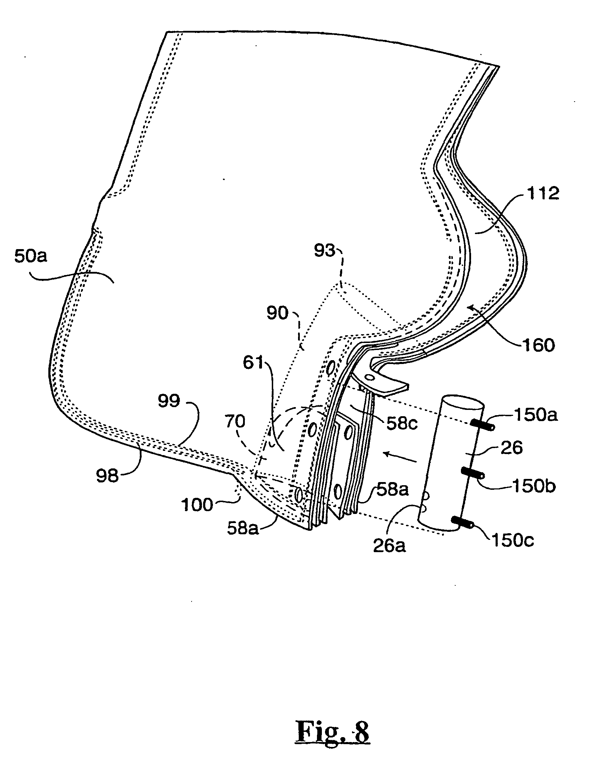

FIG. 8 shows an alternative embodiment of the invention. The airbag 50¹ shown does not include an upper chamber, such as 50b, or a portion 122 of the panel 120. This airbag 50¹ includes the bubble 160 and the rear separator panel 112.

FIG. 9 shows an alternate diverter 90a having additional vent openings 91a, 91b. Upon activation of the inflator 26 inflation gas is prbduced. This diverter 90a, as is the case with the above described diverter 90, reduces the gas thrust in the vehicle occupant's direction by redirecting the gas flow path upwardly which in turn slows down the speed at which the deploying airbag approaches the vehicle occupant. The vents 91a, 91b permit a small portion of the inflation gas to exit the diverter in a generally horizontal direction toward the vehicle occupant to assist in positioning the airbag at the side of the vehicle occupant. The diffuser panel 90b shown in FIG. 10 eliminates the discrete vent openings 91a, 91b shown in FIG. 9. The diverter 90a is formed by a panel of highly permeable fabric (such as 440 to 1000 denier woven nylon fabric) which is sewn at its top 90c to the side panels 50a, 50b generally forming a sack. As can be appreciated some of the inflation gas flows upwardly as in the case of diverter 90 and some of the inflation gas flows horizontally as in the case of diverter 90b.

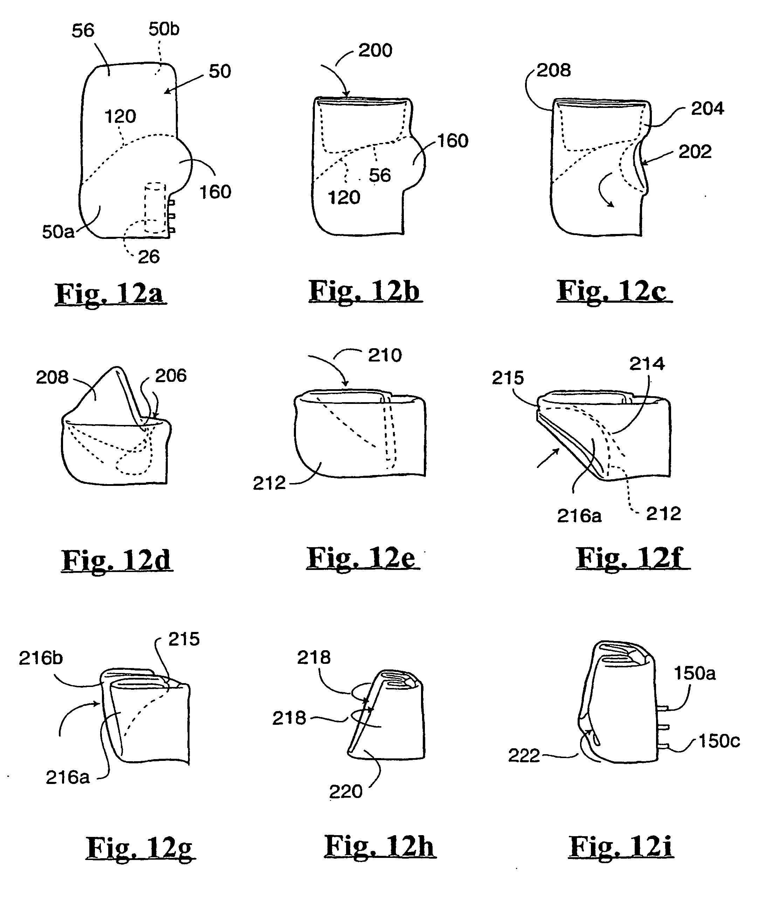

FIGS. 12A-12I illustrate the procedure used in folding a generally rectangular shaped airbag 50 (50¹ or 50¹¹) of the type previously discussed. In FIG. 12A the two panels 50a, 50b are laid flat upon a folding table with the inflator 26 positioned therein and the studs 150a-c extend outwardly. The airbag 50 includes an extending, arcuately shaped bubble portion 160: this portion is similarly laid flat. In FIG. 12B, the top 56 of each of the sewn-together panels 50a, 50b is pushed inwardly inside the remaining upper portions of the panels. The top of the panels is pushed inwardly until stopped by the separator panel 120. Arrow 200 of FIG. 12B indicates the motion of the top being pushed inwardly. The airbag 50 includes an extending bubble portion 160, that bubble portion is similarly moved inwardly as shown by arrow 202 in FIG. 12C. Thereafter, an upper, rearward portion 204 of the top of the tucked-in upper chamber 50b is moved downwardly into a void 206 formed between the panels 52a, 52b forming the lower chamber 50a. This rearward portion of the tucked upper chamber 204 is moved downwardly until the fabric forming the airbag reaches the bottom of the lower chamber 50a (the separator panel 120 is also moved to the bottom of the lower chamber). At this point in the folding process a portion 208 of the tucked upper chamber 204 (previously the upper left corner of FIG. 12C) is positioned approximately at a 45 degree angle. This condition is shown in FIG. 12D. The remaining untucked portion of the upper chamber previously designated as 208 is moved vertically downwardly until this portion 208 is level with the folded-over fabric of the lower chamber used to form the pocket 206. The downward motion is indicated by arrow 210 in FIG. 12E. As can be appreciated the steps shown in FIGS. 12D and 12E can be performed in one operation. The lower outboard corner 212 of the lower chamber is pushed inwardly generally at a 45 degree angle toward the inflator. The corner 212 of the airbag is pushed inwardly at the above-mentioned 45 degree angle until it meets a portion of the previously tucked-in fabric 214 originating from the previous folds. The top left corner 215 is separated into to wings 216a, 216b as the corner 215 is pushed inwardly. These two wings 216a, 216b are shown in FIG. 12G. As a result of this last folding step the airbag is in a generally square configuration. The wings 216a, 216b are symmetrically folded or rolled inwardly (see arrows 218) so that they reside approximately 30 degrees from the vertical as shown in FIG. 12H. The lower outboard corner 220 (see FIG. 12H) is tucked inwardly (see FIG. 12I) as designated by arrow 222, forming the final folded configuration of the airbag.

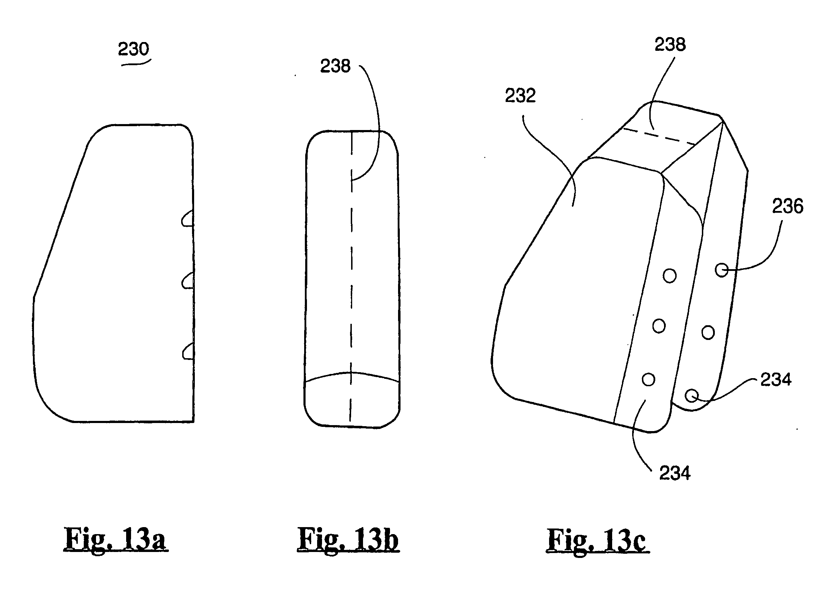

The folded airbag may be held in place by enclosing it within a plastic container or housing 230 shown in FIGS. 13A-13C. The container includes a hollow body 232 having a shape approximately that of the folded airbag shown in FIG. 12I. Extending from this body are a plurality of flaps 234. Each of the flaps includes a like plurality of openings 236. A forward edge of the body includes a line of perforations 238. The folded airbag is inserted within the body and the flaps are fitted about the mounting studs 150a-150c of the inflator 26. A plurality of fasteners, such as threaded nuts, can be secured upon each of the various mounting studs 150a-d, thereby enclosing the airbag within the cover. Upon inflation of the airbag, the airbag causes the seam 238 to break apart.

## Claims

1. An airbag for side impact protection comprising:
an airbag (50) having an inflatable first chamber (50a) formed of joined together first (52a) and second (52b) panels, the first chamber including a front first side (54) and an opposite rear second side (60);
an inflator (26) for providing gas to inflate the air bag, the inflator being positioned adjacent to said rear part (60) and including exit ports (26a) which channel the inflation gas into said rear part of the first chamber in a first direction;
a flow diverter (70, 90) positioned to receive inflation gas and to divert at least a component of said gas to flow generally perpendicular to said first direction, said flow diverter (70, 90) including an open top portion (75, 93) wherein the inflation gas flows through said open top portion;
**characterized in that** it further comprises
extending portions (60c) of said of said first and second panel (52a,52b) located on said rear second side (60) of said panels (52a,52b),
a rear separator panel (112) to separate the first and second panels along said extending portions (60c) of said first and second panels,
said extending portions (60c) and said rear separator (112) forming a three dimensional bubble portion (160), located in said lower chamber (50a), the bubble portion (160) providing a pressure accumulator (160) to directly receive inflating gas from said flow diverter (70,90) and increase the volume of said first chamber (50a).

2. The airbag for side impact protection as defined in Claim 1 wherein said rear edge of each of the first and second panels (52a, 52b) includes an extending arcuate portion (60c).

3. The airbag for side impact protection as defined in Claim 1 wherein the flow diverter (70, 90) comprises a flexible panel or fabric having an open top.

4. The airbag for side impact protection as defined in Claim 3 wherein the flow diverter (70, 90) comprises at least one vent opening in a side wall thereof.

5. The airbag for side impact protection as defined in Claim 4, wherein the vent openings of the flow diverter comprise pores in a permeable fabric.

6. The airbag for side impact protection as defined in Claim 1, including a second chamber (50b) situated above the first chamber and flow means between the first and second chambers for permitting gas to migrate from the first chamber to the second chamber.

## Patentansprüche

1. Airbag für Seitenaufprallschutz, der Folgendes umfasst:
einen Airbag (50) mit einer aufblasbaren ersten Kammer (50a), die aus zusammengefügten ersten (52a) und zweiten (52b) Panelen gebildet ist, wobei die erste Kammer eine erste Frontseite (54) und eine gegenüberliegende zweite Rückseite (60) aufweist;
einen Gasgenerator (26) zum Erzeugen von Gas zum Aufblasen des Airbag, wobei der Gasgenerator neben dem Rückteil (60) positioniert ist und Austrittsöffnungen (26a) aufweist, die das Aufblasgas in einer ersten Richtung in den Rückteil der ersten Kammer führen;
eine Strömungsumlenkvorrichtung (70, 90), die so positioniert ist, dass sie Aufblasgas aufnimmt und wenigstens eine Komponente des Gases umlenkt, so dass sie allgemein lotrecht zu der ersten Richtung strömt, wobei die Strömungsumlenkvorrichtung (70, 90) einen offenen oberen Abschnitt (75, 93) aufweist, wobei das Aufblasgas durch den offenen oberen Abschnitt strömt;
**dadurch gekennzeichnet, dass** er ferner Folgendes umfasst:
Erweiterungsabschnitte (60c) des ersten und zweiten Panels (52a, 52b) auf der zweiten Rückseite (60) der Panelen (52a, 52b),
ein hinteres Trennpanel (112) zum Trennen des ersten und zweiten Panels entlang den Erweiterungsabschnitten (60c) des ersten und des zweiten Panels,
wobei die Erweiterungsabschnitte (60c) und das hintere Trennpanel (112) einen dreidimensionalen Blasenabschnitt (160) bilden, der sich in der unteren Kammer (50a) befindet, wobei der Blasenabschnitt (160) einen Druckspeicher (160) bildet, um Aufblasgas von der Strömungsumlenkvorrichtung (70, 90) direkt zu empfangen und das Volumen der ersten Kammer (50a) zu erhöhen.

2. Airbag für Seitenaufprallschutz nach Anspruch 1, wobei der hintere Rand des ersten und des zweiten Panels (52a, 52b) jeweils einen bogenförmigen Erweiterungsabschnitt (60c) aufweist.

3. Airbag für Seitenaufprallschutz nach Anspruch 1, wobei die Strömungsumlenkvorrichtung (70, 90) ein flexibles Panel oder Gewebe mit offener Oberseite umfasst.

4. Airbag für Seitenaufprallschutz nach Anspruch 3, wobei die Strömungsumlenkvorrichtung (70, 90) wenigstens eine Lüftungsöffnung in einer Seitenwand davon umfasst.

5. Airbag für Seitenaufprallschutz nach Anspruch 4, wobei die Lüftungsöffnungen der Strömungsumlenkvorrichtung Poren in einem durchlässigen Gewebe umfassen.

6. Airbag für Seitenaufprallschutz nach Anspruch 1 mit einer zweiten Kammer (50b), die sich über der ersten Kammer befindet, und mit Durchflussmitteln zwischen der ersten und der zweiten Kammer, so dass Gas von der ersten Kammer zur zweiten Kammer strömen kann.

## Revendications

1. Coussin d'air de protection contre un impact latéral, comprenant:
un coussin d'air (50) comportant une première chambre gonflable (50a) formée d'un premier (52a) et d'un deuxième (52b) panneaux reliés, la première chambre englobant un premier côté avant (54) et un deuxième côté arrière opposé (60);
un dispositif de gonflement (26) pour fournir du gaz pour gonfler le coussin d'air, le dispositif de gonflement étant positionné près de ladite partie arrière (60) et englobant des orifices de sortie (26a) guidant le gaz de gonflement dans ladite partie arrière de la première chambre, dans une première direction;
un déflecteur d'écoulement (70, 90) positionné de sorte à recevoir le gaz de gonflement et à dévier au moins une composante dudit gaz en vue d'un écoulement généralement perpendiculaire dans ladite première direction, ledit déflecteur d'écoulement (70, 90) englobant une partie supérieure ouverte (75, 93), le gaz de gonflement s'écoulant à travers ladite partie supérieure ouverte;
**caractérisé en ce qu'**il comprend en outre
des parties à extensions (60c) desdits premier et deuxième panneaux (52a, 52b) agencées sur ledit deuxième côté arrière (60) desdits panneaux (52a, 52b);
un panneau de séparation arrière (112) destiné à séparer les premier et deuxième panneaux le long desdites parties d'extension (60c) desdits premier et deuxième panneaux;
lesdites parties d'extension (60c) et ledit séparateur arrière (112) formant une partie de bulle tridimensionnelle (160) agencée dans ladite chambre inférieure (50a), la partie de bulle (160) formant un accumulateur de pression (160) pour recevoir directement le gaz de gonflement dudit déflecteur d'écoulement (70, 90) et accroître le volume de ladite première chambre (50a).

2. Coussin d'air de protection contre un impact latéral selon la revendication 1, dans lequel ledit bord arrière de chacun des premier et deuxième panneaux (52a, 52b) englobe une partie arquée à extension (60c).

3. Coussin d'air de protection contre un impact latéral selon la revendication 1, dans lequel le déflecteur d'écoulement (70, 90) comprend un panneau flexible ou du tissu comportant une partie supérieure ouverte.

4. Coussin d'air de protection contre un impact latéral selon la revendication 3, dans lequel le déflecteur d'écoulement (70, 90) comprend au moins une ouverture d'aération dans une paroi latérale correspondante.

5. Coussin d'air de protection contre un impact latéral selon la revendication 4, dans lequel les ouvertures d'aération du déflecteur d'écoulement comprennent des pores dans un tissu perméable.

6. Coussin d'air de protection contre un impact latéral selon la revendication 1, englobant une deuxième chambre (50b) agencée au-dessus de la première chambre et un moyen d'écoulement entre les première et deuxième chambres pour permettre l'écoulement du gaz de la première chambre vers la deuxième chambre.
